# EUROPÄISCHE PATENTANMELDUNG

(11) **EP 1 647 191 A1**
(43) Veröffentlichungstag der Anmeldung: **19.04.2006**
(21) Anmeldenummer: 05405210.5
(22) Anmeldetag: 24.02.2005
(51) Int. Cl.: A21D 2/26, A21D 2/36, A21D 2/38, A21D 13/02, A21D 13/04

(54) **Mehlmischung und aus dieser Mehlmischung hergestelltes Brot sowie Konzentrat aus dieser Mehlmischung und daraus hergestelltes Brot**

(30) Priorität: 12.10.2004 CH 16832004
(71) Anmelder: Dambach AG, 5612 Villmergen (CH)
(72) Erfinder: Brunner, Arnold, 5612 Villmergen (CH)
(74) Vertreter: Fischer, Michael

(57) **Zusammenfassung**

Die Erfindung betrifft eine Mehlmischung für Brot und ein Brot auf der Basis von Mehl, vorzugsweise Landmehl, wobei auf 1000g Mehl 40-120g Sojaschot getoastet, 40-85g Weizenkleie, 20-45g Backhilfsmittel, 40-120g Speisehafergrütze, 30-120g Speisehaferkleie, 60-110g Weizenkleber VITAL, 60-160g Sonnenblumenkerne geschält, 50-120g Leinsamen ganz, 50-130g Sesamsamen geschält und 10-35g Malz aus Gerste beigefügt sind. Weiter betrifft die Erfindung auch ein Konzentrat aus diesen Zutaten sowie ein Brot, hergestellt aus der Mehlmischung oder dem Konzentrat.

## Beschreibung

Die Erfindung betrifft eine Mehlmischung für Brot und ein Brot auf der Basis von Mehl, sowie ein Konzentrat aus dieser Mehlmischung und daraus hergestelltes Brot.

Bäckereien beziehen Mehlmischungen von den Müllereien und verarbeiten diese unter Beimischung weiterer Produkte wie Hefe, Salz und Wasser, zu Teigen und backen diese schliesslich zu Broten.

Gemäss der Schweizerischen Lebensmittelverordnung gibt es Normalmehl und Spezialmehl. Normalmehl ist das aus Weizen hergestellte Müllereiprodukt. Spezialmehl ist Mehl, das sich von Normalmehl entweder durch seine Zusammensetzung oder durch den Verwendungszweck deutlich unterscheidet, beispielsweise durch Zumischung von Dinkelmehl, Roggenmehl, Gerstenmehl oder Fünfkornmehl, oder durch Zugabe von Weizenkeimlingen, Kuchenmehl und/oder Biskuitmehl.

Folgende Sorten werden unterschieden: Weissmehl ist vorwiegend aus dem inneren Teil des Getreidekornes gewonnenes Mehl; Halbweissmehl ist nahezu schalenfreies Mehl; Ruchmehl ist Mehl, das noch einen Teil der äusseren Schalenschicht enthält; Vollkornmehl ist aus dem ganzen Getreidekorn gewonnenes Mehl, mit oder ohne äusserste Schalenteile, wobei die Gesamtausbeute mindestens 98 Massenprozent des gesamten Getreidekorns betragen muss. Vollkornmehl wird als sehr gesund bezeichnet, weil es verdauungsfördernd ist.

Als Spezialmehl gilt beispielsweise Landmehl. Landmehl ist eine Mischung aus Weizen, Roggen und Dinkel oder Urdinkel. Diese Mischung wird als universales Mehl eingesetzt für beispielsweise Brot, Zopf, Kleingebäck und Pizza.

Je nach Brot, das gebacken werden soll, wird eine andere Mehlmischung verwendet.

Bekannt und beliebt sind beispielsweise Mehlmischungen für Weiss-, Halbweiss- Ruch- und Vollkornbrote. Weiss- und Halbweissmehle sind, was den Geschmack angeht, bei vielen Konsumenten beliebter als Vollkornbrote. Andererseits sind Vollkornbrote gesünder wegen den Ballaststoffen, welche aus der Schale des Korns stammen und im Weissbrot nicht enthalten ist.

### Beschreibung der Erfindung

Es ist die Aufgabe der vorliegenden Erfindung, eine Mehlmischung zu beschreiben, welche einerseits von einem Grossteil der Konsumenten geschmacklich bevorzugt wird, andererseits gesundheitlich dieselben Vorzüge bietet wie Vollkornbrote. Zudem soll ein Konzentrat angegeben werden aus dieser Mehlmischung, welches sich ökonomisch als sinnvoll erweist unter Berücksichtigung eines weiten Transportweges.

Die Aufgabe wird gelöst durch eine Mehlmischung gemäss den Merkmalen des ersten Patentanspruchs sowie durch ein Konzentrat gemäss Anspruch 14.

Die Mehlmischung umfasst ausser Mehl getoastetes Sojaschot, Weizenkleie, Backhilfsmittel, Speisehafergrütze, Speisehaferkleie, Weizenkleber VITAL, geschälte Sonnenblumenkerne, ganze Leinsamen, geschälte Sesamsamen und Malz aus Gerste. Im Folgenden wird angegeben, welche Funktion diese Zutaten für die Mehlmischung wahrnehmen. Als Mehl kann erfindungsgemäss insbesondere Landmehl oder ein anderes Spezialmehl verwendet werden.

Diese erfindungsgemässe Mehlmischung wird von einer Grosszahl der Konsumenten als besonders schmackhaft empfunden. Dies liegt unter anderem an dem beigegebenen Malz, vorzugsweise Malz aus Gerste. Dieses Malz ist Karamell-artig und hat somit einen etwas süsslichen Geschmack. Dadurch wird auch der typischen Brotgeschmack unterstützt.

Brot, welches aus der erfindungsgemässen Brotmischung gebacken wurde, ist ebenso verdauungsfördernd wie Vollkornbrot, obwohl kein Vollkornmehl enthalten ist. Dies wurde dadurch erreicht, dass Weizenkleie beigefügt wird. Weizenkleie ist der Rückstand des gemahlenen Weizenkorns und dient zur Bereicherung der Zivilisationskost, um deren Mangel an Ballaststoffen auszugleichen. Weizenkleie quillt im Darm und übt damit einen Reiz auf die Schleimhaut aus, der die Muskeltätigkeit der Hohlorgane Speiseröhre, Magen und Darm anregt und einer chronischen Verstopfung vorbeugt oder sie beseitigen hilft. Weizenkleie wird auch als Ruchmacher bezeichnet. Kleie ist der Schalenrückstand aus der Getreideverarbeitung und wird beim Mahlen der Weizenkörner zum Auszugsmehl vom Mehl abgetrennt. Die Kleie besteht aus dem Keimling und den Randschichten des Weizenkorns (Fruchthaut, Samenschale und Aleuronschicht = Silberhäutchen oder Wabenschicht, sie umschließt den Mehlkern des Getreidekorns und den Keim) und daher zu fast 50 Prozent aus unverdaulichen Fasern, sogenannten Ballaststoffen. Diese Randschichten des Korns sind besonders reich an Vitaminen, Eiweißen (Proteinen) und Mineralstoffen. Weizenkleie wirkt verdauungsfördernd, entgiftend und sättigend. Die unverdaulichen Pflanzenfasern der Kleie quellen im Darm auf. Dadurch wird der Stuhl lockerer und die Passagezeit verkürzt. Außerdem vermag die Rohfaser Gallensäuren und Cholesterin sowie auch giftige Elemente im Darm zu binden. Durch die Einnahme von etwa 35g Ballaststoffen am Tag kann die Verdauung günstig beeinflusst werden und die voluminöse Kost gibt bereits vom Magen her ein längeres Sättigungsgefühl, der gesamte Magen-Darm-Trakt wird zu vermehrter Arbeit angeregt. Durch die Fähigkeit, organische Stoffe an sich zu binden, können beispielsweise auch krebserregende Stoffe aus dem Darm entfernt werden, wodurch das Krebsrisiko gesenkt werden kann.

Haferkleie nimmt einen festen Platz in der cholesterinbewussten Ernährung ein, da sie als Diätetikum und Schonkost bei unzähligen Beschwerden wie z. B. zu hohem Cholesterinspiegel eingesetzt wird.

Sojaschrot enthält rund 43-48% Rohprotein. Sojabohnen werden mechanisch zerkleinert und das Öl mit Hilfe eines Lösungsmittels abgetrennt. Der verbleibende Feststoff, das Sojaschrot, wird getoastet (über einen Zeitraum von ca. 30 min mit etwa 105°C heissem Dampf behandelt), um Lösungsmittelreste zu entfernen und unerwünschte Inhaltsstoffe abzubauen. Eiweisse werden zerlegt und neu aufgebaut. Die intensive Wärmebehandlung führt zu einer Eiweissdenaturierung, d. h. die räumliche Struktur des Eiweißes wird zerstört. Damit wird das Eiweiß inaktiv und verliert seine genetische oder biologische Wirksamkeit. Die Eiweißdenaturierung hat ernährungsphysiologische Vorteile, weil die denaturierten Proteine im Magen-Darm-Trakt von den eiweissspaltenden Enzymen leichter verarbeitet werden können. Im weiteren Verlauf des Verdauungsprozesses werden die Proteine bis hin zu den Aminosäuren abgebaut. Insbesondere Aminosäuren können in die Darmzellen aufgenommen werden und stehen dann dem Organismus als Grundbaustein für die körpereigene Proteinsynthese zur Verfügung.

Backhilfsmittel, auch Teigführungsmittel genannt, ist ein Sammelbegriff für verschiedene Zutaten, die in der Bäckerei eingesetzt werden können. Dazu zählen zum Beispiel Frischhalte- und Bräunungsmittel, flüssigkeitsregulierende Zusätze, Enzyme und Substanzen zur Hemmung des Pilzwachstums. Zu den natürlichen Backmittel zählen Natursauerteig, Backferment oder Hefe. Vorzugsweise wird das unter dem Namen Frapant® verkaufte Backhilfsmittel verwendet.

Speisehafergrütze ist ein Nährmittel aus grob geschrotetem Hafer und wird in den Graduierungen mittel, fein oder grob angeboten. In der Herstellung werden die Teile des Hafers bei etwa 140°C zu Grütze eingekocht. Die Bruchstücke liegen in der Größe zwischen Griess und Graupen. Speisehafergrütze ist gelblich weiss und besitzt einen nussigen Geschmack. Gesundheitsfördernd ist diese Grütze dank ihrer schleimbildenden Wirkung.

Weizenkleber (Gluten) verbessert die Backeigenschaften des Teiges, vergrössert das Volumen der Brote und verhindert weitgehend deren Zusammenfallen. Es ermöglicht das Backen mit problematischen Vollkornmehlen, wie Roggenmehl, Hafermehl und allen Mehlen, die wenig oder gar kein Gluten enthalten.

Sonnenblumenkerne geschält enthalten etwa 50% Fett und 22% Eiweiss und tragen somit einerseits geschmacklich, andererseits durch die Inhaltstoffe zur Güte der Mehlmischung bei.

Leinsamen ist ein mild wirkendes, linderndes Mittel bei allen katarrh-artigen Entzündungen von Magen und Darm. Durch den hohen Schleimgehalt ist Leinsamen bei Verstopfung geeignet. Da Leinsamen über die Quellung und Volumenzunahme die Darmperistaltik anregt und dadurch abführend wirkt, ist auch bei längerem Gebrauch kein Kaliummangel zu erwarten.

Sesamsamen sind klein, flach und oval. Sie bekommen beim Rösten, also vorwiegend auf der Brotkruste, einen guten, nussigen Geschmack.

Die erfindungsgemässe Mischung zeichnet sich letztlich durch die ausgewogene Zusammenstellung dieser Zutaten aus. Dabei darf kein Geschmack den anderen übertönen. Vorwiegend muss aber darauf geachtet werden, dass die gesundheitlichen Aspekte, namentlich das Wohlbefinden, das Sättigungsgefühl und die Verdauung, im Einklang miteinander stehen. Die gesundheitsfördernde Wirkung dieser erfindungsgemässen Mehlmischung ist mindestens so gut wie die von Vollkornmehl. Ein daraus entstandenes Brot ist aber durch die Wirkung der Kleie allerdings noch gesünder. Durch das Malz schmeckt ein solches Brot auch besser.

Diese Ausgeglichenheit wird durch die folgenden Beispiele erreicht. Weitere Produkte können der erfindungsgemässen Mischung zugefügt werden, um eine andere Geschmacksrichtung zu bekommen.

### Beispiel 1 und 2

Die folgende Beispiele gibt die Grenzwerte an, innerhalb derer bei den Untersuchungen gute Resultate erzielt wurden. Dabei sind die Mengenabgaben der Zutaten zum Mehl in Gewichtsanteilen zu 1000 Gewichtsanteilen Mehl angegeben. Die absoluten Mindest- und Höchstwerte (Beispiel 1) für die erfindungsgemässe Mehlmischung sind in den beiden Spalten (a) und (d) angegeben. Die Spalten (b) und (c), Beispiel 2, geben die Grenzwerte der bevorzugten Zugabemengen an.

| **Ausgangsmittel:** | | **Anteile** | | | |
|---|---|---|---|---|---|
| | Mehl | 1'000 | 1'000 | 1'000 | 1'000 |
| **Zutaten** | | **(a) absolutes Minimum** | **(b) bevorzugtes Minimum** | **(c) bevorzugtes Maximum** | **(d) absolutes Maximum** |
| | Sojaschot getoastet | 40 | 60 | 110 | 120 |
| | Weizenkleie | 40 | 50 | 75 | 85 |
| | Backhilfsmittel | 20 | 25 | 40 | 45 |
| | Speisehafergrütze | 40 | 60 | 100 | 120 |
| | Speisehaferkleie | 30 | 60 | 90 | 120 |
| | Weizenkleber VITAL® | 60 | 70 | 100 | 110 |
| | Sonnenblumenkerne geschält | 60 | 90 | 120 | 160 |
| | Leinsamen ganz | 50 | 70 | 100 | 120 |
| | Sesamsamen geschält | 50 | 60 | 110 | 130 |
| | Malz aus Gerste | 10 | 15 | 25 | 35 |
| SUMME | | 1'400 | 1'560 | 1'870 | 2'045 |

Als Mehl kann insbesondere Landmehl oder ein anderes Spezialmehl verwendet werden.

### Beipiele 3, 4, 5 und 6

Die folgenden Beispiele geben Verhältnisse an, mit denen im Besonderen gute Resultate erzielt wurden.

| **Ausgangsmittel:** | | **Anteile** | | | |
|---|---|---|---|---|---|
| | Mehl | 1'000 | 1'000 | 1'000 | 1'000 |
| **Zutaten** | | **Bsp. 3** | **Bsp. 4** | **Bsp. 5** | **Bsp. 6** |
| | Sojaschot getoastet | 115 | 70 | 55 | 100 |
| | Weizenkleie | 47 | 72 | 80 | 52 |
| | Backhilfsmittel | 21 | 42 | 30 | 35 |
| | Speisehafergrütze | 115 | 115 | 50 | 80 |
| | Speisehaferkleie | 45 | 110 | 70 | 85 |
| | Weizenkleber VITAL® | 65 | 108 | 75 | 80 |
| | Sonnenblumenkerne geschält | 100 | 65 | 140 | 105 |
| | Leinsamen ganz | 65 | 80 | 115 | 95 |
| | Sesamsamen geschält | 120 | 65 | 55 | 100 |
| | Malz aus Gerste | 33 | 13 | 18 | 24 |
| SUMME | | 1'729 | 1'744 4 | 1'693 | 1'762 |

Als Mehl kann insbesondere Landmehl oder ein anderes Spezialmehl verwendet werden. Bevorzugt wird eine Mehl mit einer Zusammensetzung aus etwa 40% Ruchmehl Typ 1000, 20% Halbweissmehl Typ 720, 25% Roggenmehl dunkel und 15% Dinkelhalbweissmehl 720. Diese Angaben geben lediglich geeignete Mittelwerte an, wobei die einzelnen Anteile bis zu +/- 15% der angegebenen Werte variieren können.

Die erfindungsgemässe Mehlmischung eignet sich hervorragend zur Herstellung von erfindungsgemässen Broten. Im folgenden ist ein Rezeptvorschlag angegeben, der zu guten Resultaten führt.

### Rezeptvorschlag für 10 Brote:

Für die Teigherstellung werden 2'000g Wasser, ca. 2'800g erfindungsgemässe Mehlmischung und 90g Hefe gemischt und am Ende der Mischzeit 50 - 70g Meersalz hinzugefügt. So entsteht ein Teig von 4'960g. Die Mischzeit beträgt mit einem Spiralkneter etwa 5 Minuten. Die Knetzeit dauert 6 - 8 Minuten und die Stockgare 60 Minuten. Zum Aufarbeiten werden 10 Stück ä 470g abgewogen, leicht rundgewirkt. Nach kurzem abstehen lassen werden die Brote länglich geformt und in Formen von 20 x 9 x 6 cm eingelegt. Die Stückgare beträgt 25 bis 35 Minuten. Zum Backen werden die Brote in vorgedämpften, mittelwarmen Ofen eingeschossen und bei offenem Zug rösch ausgebacken. Vorzugsweise werden die Brote die letzten 15 Minuten ohne Form ausgebacken. Die Ofentemperatur beträgt ca. 230 °C abfallend und die Backzeit 60 bis 70 Minuten.

Es hat sich gezeigt, dass es von Vorteil ist, ein Konzentrat der Zutaten zusammenzustellen, welche lediglich etwa einen Viertel der gesamten Mehlmischung ausmachen. Dies hat den Vorteil, kleine Mengen transportieren zu müssen. Für Lieferungen werden daher bevorzugt solche Zutaten zusammengestellt, welche schwierig zu besorgen sind. Diese werden dann in den Bäckereien mit handelsüblichen Zutaten ergänzt und anschliessend nach dem oben angegebenen Rezept zu Broten verarbeitet.

Das Konzentrat umfasst von den in den Beispielen angegebenen Zutaten die Weizenkleie, das Backhilfsmittel, den Weizenkleber VITAL® sowie das Malz aus Gerste. Zudem muss Mehl als Trägerstoff beigemischt werden. Dafür wird von insgesamt verwendeten Landmehl der gesamte Anteil des Dinkelhalbweissmehl 720 sowie etwa 35% des Gesamtanteils des Roggenmehl dunkel beigemischt. Der Rest des Roggenmehl dunkel sowie das Ruchmehl Typ 1000 und das Halbweissmehl Typ 720 werden individuell in den Bäckerein zugefügt.

### Beispiel 7 und 8

Die folgende Beispiele gibt die Grenzwerte an, innerhalb derer bei den Untersuchungen gute Resultate erzielt wurden.

| | | **Anteile** | | | |
|---|---|---|---|---|---|
| **Zutaten** | | **(a) absolutes Minimum** | **(b) bevorzugtes Minimum** | **(c) bevorzugtes Maximum** | **(d) absolutes Maximum** |
| | Roggenmehl dunkel | 65 | 70 | 80 | 85 |
| | Dinkelhalbweissmehl 720 | 135 | 150 | 170 | 180 |
| | Weizenkleie | 40 | 50 | 75 | 85 |
| | Backhilfsmittel | 20 | 25 | 40 | 45 |
| | Weizenkleber VITAL® | 60 | 70 | 100 | 110 |
| | Malz aus Gerste | 10 | 15 | 25 | 35 |
| SUMME | | 330 | 380 | 490 | 540 |

### Beipiele 9, 10, 11 und 12

Die folgenden Beispiele geben Verhältnisse an, mit denen im Besonderen gute Resultate erzielt wurden.

| | | **Anteile** | | | |
|---|---|---|---|---|---|
| **Zutaten** | | **Bsp. 3** | **Bsp. 4** | **Bsp. 5** | **Bsp. 6** |
| | Roggenmehl dunkel | 72 | 82 | 70 | 77 |
| | Dinkelhalbweissmehl 720 | 178 | 168 | 180 | 173 |
| | Weizenkleie | 47 | 72 | 80 | 52 |
| | Backhilfsmittel | 21 | 42 | 30 | 35 |
| | Weizenkleber VITAL® | 65 | 108 | 75 | 80 |
| | Malz aus Gerste | 33 | 13 | 18 | 24 |
| SUMME | | 419 | 489 | 458 | 447 |

## Patentansprüche

1. Mehlmischung für Brot auf der Basis von Mehl, **dadurch gekennzeichnet, dass** auf 1000g Mehl 40-120g Sojaschot getoastet, 40-85g Weizenkleie, 20-45g Backhilfsmittel, 40-120g Speisehafergrütze, 30-120g Speisehaferkleie, 60-110g Weizenkleber VITAL, 60-160g Sonnenblumenkerne geschält, 50-120g Leinsamen ganz, 50-130g Sesamsamen geschält und 10-35g Malz aus Gerste beigefügt sind.

2. Mehlmischung nach einem der vorhergehenden Ansprüche, **dadurch gekennzeichnet, dass** als Mehl Landmehl verwendet wird.

3. Mehlmischung nach einem der vorhergehenden Ansprüche, **dadurch gekennzeichnet, dass** auf 1000g Mehl 60-110g Sojaschot getoastet beigefügt ist.

4. Mehlmischung nach einem der vorhergehenden Ansprüche, **dadurch gekennzeichnet, dass** auf 1000g Mehl 50-75g Weizenkleie beigefügt ist.

5. Mehlmischung nach einem der vorhergehenden Ansprüche, **dadurch gekennzeichnet, dass** auf 1000g Mehl 25-40g Backhilfsmittel beigefügt ist.

6. Mehlmischung nach einem der vorhergehenden Ansprüche, **dadurch gekennzeichnet, dass** auf 1000g Mehl 60-100g Speisehafergrütze beigefügt ist.

7. Mehlmischung nach einem der vorhergehenden Ansprüche, **dadurch gekennzeichnet, dass** auf 1000g Mehl 60-90g Speisehaferkleie beigefügt ist.

8. Mehlmischung nach einem der vorhergehenden Ansprüche, **dadurch gekennzeichnet, dass** auf 1000g Mehl 70-100g Weizenkleber VITAL beigefügt ist.

9. Mehlmischung nach einem der vorhergehenden Ansprüche, **dadurch gekennzeichnet, dass** auf 1000g Mehl 90-120g Sonnenblumenkerne geschält beigefügt ist.

10. Mehlmischung nach einem der vorhergehenden Ansprüche, **dadurch gekennzeichnet, dass** auf 1000g Mehl 70-100g Leinsamen ganz beigefügt ist.

11. Mehlmischung nach einem der vorhergehenden Ansprüche, **dadurch gekennzeichnet, dass** auf 1000g Mehl 60-110g Sesamsamen geschält beigefügt ist.

12. Mehlmischung nach einem der vorhergehenden Ansprüche, **dadurch gekennzeichnet, dass** auf 1000g Mehl 15-25g Malz aus Gerste beigefügt ist.

13. Brot, **dadurch gekennzeichnet, dass** es aus einer Mehlmischung gemäss einem der vorhergehenden Ansprüche hergestellt ist.

14. Konzentrat einer Mehlmischung für Brot umfassend 65-85g Roggenmehl dunkel, 135-180g Dinkelhalbweissmehl 720, 40-85g Weizenkleie, 20-45g Backhilfsmittel, 60-110g Weizenkleber VITAL und 10-35g Malz aus Gerste.

15. Konzentrat gemäss Anspruch 14, **dadurch gekennzeichnet, dass** der Anteil Roggenmehl dunkel 70-80g beträgt.

16. Konzentrat gemäss Anspruch 14 oder 15, **dadurch gekennzeichnet, dass** der Anteil Dinkelhalbweissmehl 720 150-170g beträgt.

17. Konzentrat gemäss einem der Ansprüche 14 bis 16, **dadurch gekennzeichnet, dass** der Anteil Weizenkleie 50-75g beträgt.

18. Konzentrat gemäss einem der Ansprüche 14 bis 17, **dadurch gekennzeichnet, dass** der Anteil Backhilfsmittel 25-40g beträgt.

19. Konzentrat gemäss einem der Ansprüche 14 bis 18, **dadurch gekennzeichnet, dass** der Anteil Weizenkleber VITAL 70-100g beträgt.

20. Konzentrat gemäss einem der Ansprüche 14 bis 19, **dadurch gekennzeichnet, dass** der Anteil Malz aus Gerste 15-25g beträgt.

21. Brot, **dadurch gekennzeichnet, dass** es aus einem Konzentrat gemäss einem der Ansprüche 14 bis 20 hergestellt ist.
